# EUROPEAN PATENT SPECIFICATION

(11) **EP 1 446 920 B1**
(45) Date of publication and mention of the grant of the patent: **11.02.2009**
(21) Application number: 02786325.7
(22) Date of filing: 12.11.2002
(51) Int. Cl.: H04L 12/28, H04L 12/56, H04L 29/06

(54) **METHODS FOR PROVIDING QUALITY OF SERVICE IN IEEE 802.11 SYSTEMS**
VERFAHREN ZUR BEREITSTELLUNG VON QUALITY-OF-SERVICE IN SYSTEMEN GEMÄSS IEEE 802.11
PROCÉDÉS PERMETTANTS DE FOURNIR UNE QUALITÉ DE SERVICE DES SYSTÈMES IEEE 802.11

(30) Priority: 12.11.2001 US 350764 P
(43) Date of publication of application: 18.08.2004
(73) Proprietor: TELEFONAKTIEBOLAGET LM ERICSSON (publ), 164 83 Stockholm (SE)
(72) Inventor: LINDSKOG, Jan, S-435 43 Pixbo (SE); ROMMER, Stefan, S-416 73 Göteborg (SE); RYDNELL, Gunnar, S-421 59 V Frölunda (SE); HANSSON, Ulf, S-443 39 Lerum (SE); KULLANDER, Jan, S-413 16 Göteborg (SE); JOHANSSON, Karl, Fredrik, S-416 70 Göteborg (SE)
(74) Representative: Sjöberg, Mats Hakan
(86) International application number: PCT/SE2002/002070
(87) International publication number: WO 2003/043267

(56) References cited:
- EP-A2- 1 175 051
- WO-A2-01/65805
- BORDER J. ET AL.: 'Performance enhancing proxies intended to mitigate link-related degradations' NETWORK WORKING GROUP, RFC 3135, IETF, [Online] June 2001, XP002960550 Retrieved from the Internet: <URL:http://www.ietf.org/rfc/rfc3135.txt?nu mber=3135> [retrieved on 2003-01-28]
- MUNOZ L. ET AL.: 'Optimizing internet flows over IEEE 802.11b wireless local area networks: a performance-enhancing proxy based on forward error correction' IEEE COMMUNICATIONS MAGAZINE vol. 39, no. 12, December 2001, pages 60 - 67, XP001110504
- XYLOMENOS G. ET AL.: 'TCP performance issues over wireless links' IEEE COMMUNICATIONS MAGAZINE vol. 39, April 2001, pages 52 - 58, XP001107836

## Description

### FIELD OF THE INVENTION

The present invention relates to wireless LAN networks, and more particularly, to methods and systems for providing quality of service within IEEE 802.11 systems.

### BACKGROUND OF THE INVENTION

The IEEE 802.11 wireless local area network protocol enables wireless communications between access points and mobile terminals within a cell. IEEE 802.11 provides two methods for accessing the access points by the mobile terminal. The distributed coordination function (DCF) enables a number of units to simultaneously contend for access to the network. The point coordination function (PCF) allows an access point to control access to the network. While existing access points can distribute bandwidth between mobile terminals within a cell using the point coordination function, currently most 802.11 products do not support the polling mechanism that is used in the point coordination function. This leaves a system that may only be used to control downlink traffic and has very restricted possibilities with respect to QoS.

The IEEE 802.11 standard presently provides no explicit support for quality of service (QoS). A new standard is currently being worked on that would provide QoS support. However, this update is far from being implemented and support for QoS will not exist for a long time. Thus, there is a need for a system that will support systems having no QoS abilities and for systems that may partially support QoS and for providing some type of differentiated quality of service support within the existing 802.11 infrastructure for devices that do not support the polling mechanism of the point coordination function.

Apart from the IEEE 802.11 Wireless LAN protocol used by the end user of the wireless terminal, the IP, the UDP, the RTP (Real-Time Transport Protocol) and the TCP protocol are well known protocols.

Prior art document IETF RCF 3135, "Performance Enhancing Proxies Intended to Mitigate Link-Related Degradations", J. Border et al. University of Oulu, June 2001 deals with performance enhancing proxy (PEP) techniques: "A PEP is used to improve the performance of the Internet protocols on network paths where native performance suffers due characteristics of a link or sub network on the path" (see, section 1, and 5.3.1). A wireless link is one example of an error prone link. The PEP techniques may be based on TCP acknowledge (ACK) manipulation (see, section 3.1). The PEP techniques may have negative implications on other QoS control mechanisms, why the network administrator is advised to use the PEP techniques with caution (cf. section 4.5). In section 5.3.2, a TCP retransmission mechanism for W-LAN involving actively retransmitting lost data segments and discarding duplicate ACK's has been proposed for identifying packet loss and thus to avoid fast retransmissions and consequential congestion. In summary, the object of IETF RCF3135 appears to be to improve the service of the individual mobile station or at least the overall performance of all mobile stations in the cell. The PEP techniques in IETF RCF3135 concern the transport layers and application layers, c. f. 2.1.1 and 2.1.2.
Prior art document "TCP performance issues over wireless links", G. Xylomenos et al. IEEE, April 2001 discusses methods for improving performance over TCT /IP over wireless links. Among others it is suggested to improve TCP performance for users in general by a number of different techniques involving e.g. decomposing en-end-to-end connections into separate TCP sessions for a wired path and a wireless path of a link; using an Eifel scheme to avoid spurious timeouts and fast retransmissions due to handovers or delayed link-layer re-transmissions, or performing local error recovery at the IP level. The document is not dealing with establishing QoS differentiation.

### SUMMARY

The present invention overcomes the foregoing and other problems with a method for providing quality of service in an 802.11 wireless network wherein data received from at least one mobile terminal is processed at an access point or intermediate node using a quality of service proxy functionality within the access point or node. The at least one mobile terminal is then provided with a quality of service operation from the access point. The invention is defined in independent method claims 1, 3, 4 and 6.

### BRIEF DESCRIPTION OF THE DRAWINGS

The accompanying drawings, which are included to provide a further understanding of the invention and are incorporated in and constitute a part of this specification, illustrate embodiments of the invention that together with the description serve to explain the principles of the invention. In the drawings:
Fig. 1 illustrates an 802.11 wireless local area network;
Fig. 2 illustrates the operation of the point coordination function;
Fig. 3 illustrates a first embodiment for providing quality of service within an 802.11 WLAN;
Fig. 4 illustrates a further embodiment for providing quality of service within an 802.11 WLAN;
Fig. 5 illustrates yet a further embodiment for providing quality of service in an 802.11 WLAN;
Fig. 6 illustrates yet another embodiment for providing quality of service in an 802.11 WLAN;
Fig. 7 illustrates a duration/ID field within a frame transmitted from an access point to various mobile terminals;
Fig. 8 illustrates a NAV transmission to multiple STAs;
Fig. 9 illustrates a use of an extended network allocation vector to achieve quality of service within an 802.11 WLAN; and
Fig. 10 illustrates one protocol stack of a mobile terminal, AP and peer end user.

### DETAILED DESCRIPTION OF EXEMPLARY EMBODIMENTS

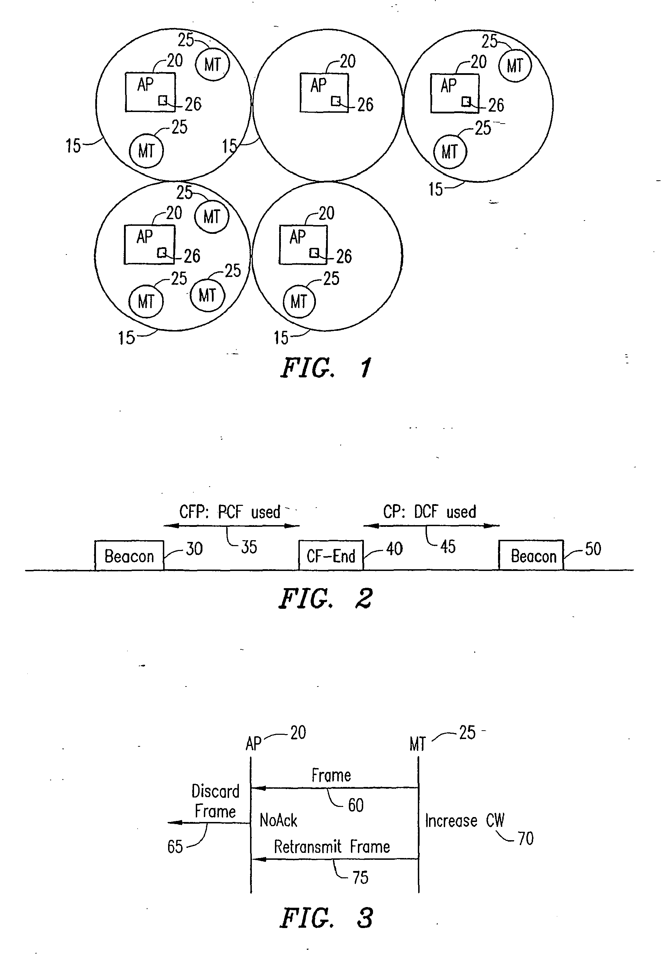

Referring now to the drawings, and more particularly to Fig. 1, there is illustrated an example of a network environment that uses the IEEE 802.11 wireless local area network standard. A wireless LAN system 10 typically consists of a number of cells 15 each having at least one access point (AP) 20 within each cell 15. Mobile terminals (MT) 25 can associate with a particular access point 20 and obtain access to the services provided by the access point 20 connecting to a wired network (not shown). The access points 20 and mobile terminals 25 are sometimes referred to as stations (STAs). In the following, the term "station" or "STA" is used when referring to both access points and mobile terminals rather than when each of these are referred to individually.

As mentioned previously, the IEEE 802.11 standard provides two methods for accessing the wireless medium, namely, the distributed coordination function (DCF) and the point coordination function (PCF). The distributed coordination function is a carrier sense multiple access with collision avoidance scheme were all STAs simultaneously contend for access to the wireless medium. The STAs listen to the wireless medium for a specified amount of time and when it is not busy, an STA begins transmitting. When collisions occur, a back off mechanism is used to reduce the risk of further collisions. There is in principle no way to predict when a transmission of a certain frame will occur or how much bandwidth a certain STA will obtain since access to the wireless medium is dependent on the amount of contention from other STAs in a cell. It is also not possible to differentiate between STAs since all STAs contend using the same rules irrespective of the type or amount of data for transmission.

The point coordination function enables an access point 20 to issue a contention free period (CFP) providing the access point 20 control over the wireless medium. This is illustrated in Fig. 2 wherein a beacon 30 transmitted by the access point 20, establishes the contention free period 35 within a particular cell. The contention free period 35 ends upon expiration of a CFP maximum duration period or upon transmission of a CF-end frame 40 by the access point 20. The contention period 45 is then in effect wherein the distributed coordination function is used for communications until a next beacon 50 is transmitted by an access point 20. During the contention free period 35 the access point 20 can transmit downlink (AP to MT) but the mobile terminals 25 are not allowed to transmit uplink (MT to AP) traffic unless they are polled by the access point 20. Thus, using the point coordination function, the access point 20 has control over both the uplink and downlink scheduling.

Since there is no support in IEEE 802.11 for explicit-distribution of bandwidth between mobile terminals 25 in a cell, there is a need to use some type quality of service proxy 26 (Fig. 1) to act as an intermediate between peers that act in quality of service functions. The quality of service proxy 26 may be situated in the access point 20, in an intermediate note such as a router. This solution may cause the mobile terminals 25 to experience different bandwidth, delay, packet error rate etc, but the 802.11 layers within the mobile terminal will not be aware of any quality of service differentiation.

Several possible implementations of a proxy are available. With respect to the following discussions, references will be made between preferred users and regular users with respect to corresponding mobile terminals 25. A preferred user, for example, has a more expensive subscription with a WLAN provider than a regular user and will thus receive preferred treatment within a cell 15. A distinction may also be made between different types of categories of data, e.g., high priority and low priority, but for purposes of the following discussion, reference will only be made to the user. The access point 20 can use the MAC address of the mobile terminals 25 to distinguish between users and/or IEEE 802.1 Q-tags to distinguish between traffic categories.

Referring now to Fig. 3, there is illustrated a first embodiment when a proxy 26 is implemented within the access point 20. Upon reception of a frame 60 from a regular mobile terminal 25 during a contention period, the access point 20 discards the frame at 65 without transmitting an acknowledgment message to the regular mobile terminal 25 user. When the mobile terminal 25 does not receive an acknowledgment for transmission of the frame, the mobile terminal 25 will increase its contention window at 70 and retransmit the frame from the mobile terminal 25 to the access point 20 at 75. The larger contention window implies a longer back off time. The back off time determines the time during which the wireless medium has to be idle before an STA is allowed to transmit. Within a cell 15 having a lot of contention, this will cause the total contention to decrease, and mobile terminals 25 that have not increased their contention window, including all preferred mobile terminals, will have an advantage in accessing the wireless medium.

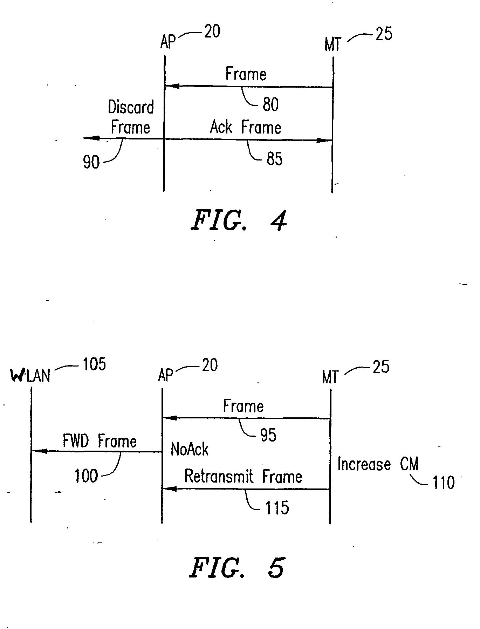

Referring now to Fig. 4, there is illustrated an alternative embodiment of an implementation of a proxy 26 wherein upon receipt of a frame 80 at the access point 20 from a regular mobile terminal 25 during the contention period, the access point 20 acknowledges at 85 the received frame as normal to the mobile terminal 25 but discards the frame at 90 and does not forward the frame to a wired network connected to the access point. This acts to decrease the pace at which higher layers of the protocol transmit the data. This decreases the pace at which data is transmitted by a TCP sender. This also reduces the amount of data transmitted onto the wireless medium by the regular mobile terminal and because of that the other mobile terminals, including the preferred mobile terminals, will experience less contention.

Referring now to Fig. 5, there is illustrated yet a further embodiment for implementation of a proxy, wherein upon reception of a frame 95 from a regular mobile terminal 25 during a contention period, the access point 20 forwards the received frame at 100 to a wired local area network 105 but prevents transmission of an acknowledgment back to the regular mobile terminal sender 25. The response will be essentially the same as that described with respect to Fig. 3, wherein the mobile terminal 25 will increase its contention window at 110 and retransmit the frame to the access point 20 at 115. The difference between this and the example of Fig. 3 will be noticeable on the higher layers, for example, on the RTT estimates of the TCP layers.

Each time an access point 20 begins a contention free period 35 as described above with respect to Fig. 2, all mobile terminals 25 within a cell set their network allocation vector (NAV) to protect the wireless medium during the contention free period. As described above, the contention free period ends when the CFP maximum duration expires or when the access point 20 transmits a CF-End frame to the broadcast address. The mobile terminals 25 will, upon reception of a CF-End frame, reset their network allocation vector and open the wireless medium to DCF contention.

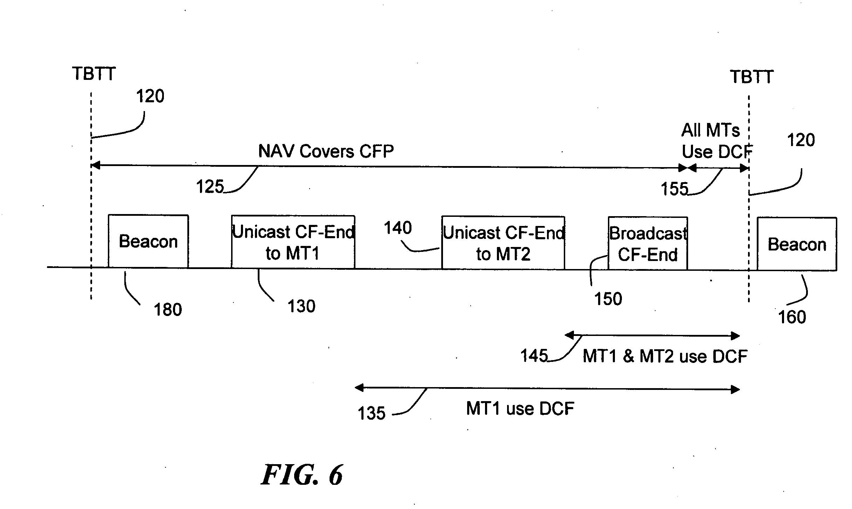

Referring now to Fig. 6, in order to provide quality of service, the access point 20 may transmit unicast CF frames addressed to preferred mobile terminals 25. This will cause the mobile terminals that receive the CF End frames to reset their network allocation vector and start using distributed coordination function. If only selected mobile terminals receive unicast CF-End frames, while all other mobile terminals still have their network allocation vector set and are prevented from transmitting, the selected mobile terminals will have privileged access to the wireless medium.

The beacon is sent periodically at times denoted by the Target Beacon Transmit Time (TBTT). At each TBTT, an access point 20 must wait for the wireless medium to become idle prior to transmitting the beacon 180. Thus, as illustrated in Fig. 6, at the occurrence of TBTT 120, the network allocation vectors are set for all mobile terminals associated with a particular access point 20. Absent any further actions, the NAV will be set for each of the mobile terminals 25 for the entire period of time indicated at 125. If the access point 20 transmits a unicast CF-End frame to mobile terminal 1 at 130. Mobile terminal 1 resets its NAV and then uses the distributed coordination function for time period 135. When access point 20 transmits a unicast CF-End frame to mobile terminal 2 at 140, both mobile terminal 1 and mobile terminal 2 use the distributed coordination function at 145. Prior to transmission of the broadcast CF-End frame at 150, only mobile terminal 1 and mobile terminal 2 are using the distributed coordination function and hence have easier access to the wireless medium. All other mobile terminals 25 are only able to communicate with the access point 20 when polled. After the broadcast, the end frame is transmitted at 150 and all mobile terminals may begin using the distributed coordination function for time period 155 until a next beacon 160 is received.

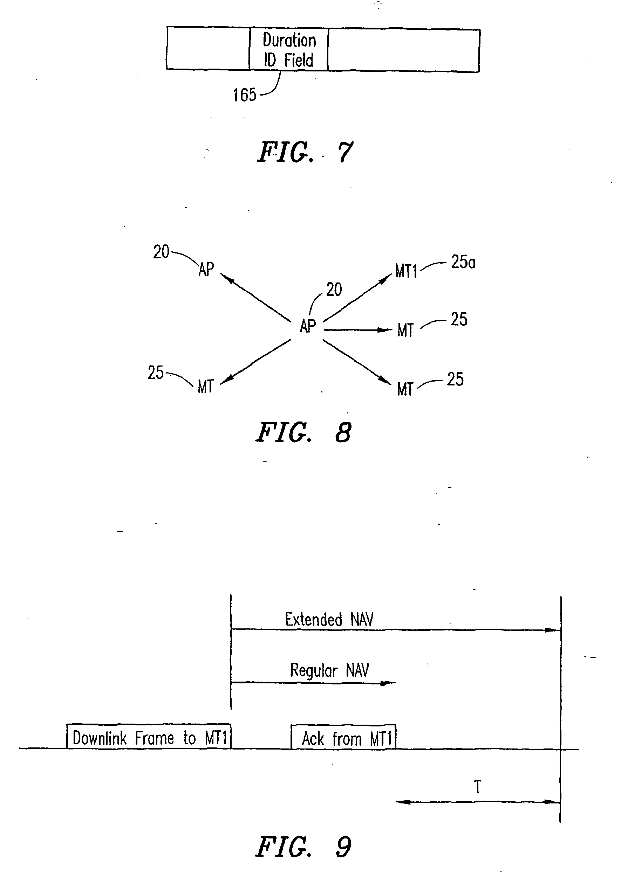

Referring now to Figs. 7-9, a further embodiment of a proxy is illustrated wherein during a contention period, the network allocation vector is used to protect the wireless medium for the duration of a frame exchange sequence. An STA that receives a frame that is not addressed to the STA is required to update its NAV value using the value in the duration /ID field 165 as shown in Fig. 7 of the received frame.

An access point 20 may give prioritized access to a given mobile terminal 25 by transmitting a frame to the mobile terminal with a value in the duration/ID field 165 indicates a time period that is larger than required. Thus, as shown in Fig. 8, when an access point 20 transmits a frame to the first mobile terminal 25a, the one or more STAs also receiving the frame set their network allocation value in accordance with the received value. Since the intended recipient mobile terminal 25a of the frame does not update its NAV, and the extended NAV will not affect the mobile terminal 25a to which the frame has been addressed. The address mobile terminal 25a will have priority access for the duration of the NAV

This mobile terminal 25a will have sole access to the wireless medium for as long as the extended NAV lasts, as illustrated in Fig. 9. The time T denotes the time during which all other mobile terminals have set their NAV and mobile terminal 25a has exclusive access to the wireless medium. The regular NAV denotes the NAV that would have been set by standard usage of the duration field. Extended NAV denotes the NAV as set by the above proposed proxy. The time T in Figure 9 should be longer than DIFS + CW*slot_time to guarantee that the DCF mechanism in mobile terminal 25a can start a transmission during time period T. CW is the contention window, DIFS is the DCF interframe spacing and slot_time is the 802.11 SlotTime. This described system would provide an implicit polling of the mobile terminal 25a.

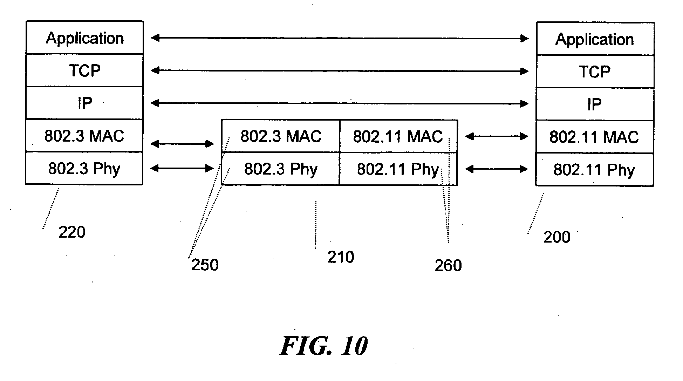

Fig. 10 shows one protocol stack 200 of a mobile terminal and the corresponding protocol stack 210 at the AP, and a protocol stack of a.peer end user 200 located at the wired LAN 220. As it can be seen the AP 210 utilizes one type of MAC and physical layer for the wired side 250 and the 802.11 MAC and physical layer 260 for the wireless side. It can also be seen that the IP layer as well as the TCP layer are transparent through the AP 210.

It is believed that the operation and construction of the present invention will be apparent from the foregoing description and, while the invention shown and described herein has been characterized as particular embodiments, changes and modifications may be made therein without departing from the invention as defined in the following claims.

## Claims

1. A method for an access point for providing quality of service in a 802.11 wireless local area network (15), comprising the steps of:
processing received data from at least one mobile terminal (MT, MT1, MT2 25, 25a) using a quality of service proxy (26); **characterized by**
providing a differentiated quality of service operation to at least one selected mobile terminal, the method comprising the steps of:
receiving a frame (80, 60) via the quality of service proxy (26) from the at least one selected mobile terminal;
discarding the received frame (90, 65); and
preventing transmission of an acknowledgment of receipt of the frame back to the at least one selected mobile terminal.

2. A method for an access point for providing quality of service in a 802.11 wireless local area network (15), comprising the steps of:
processing received data from at least one mobile terminal (MT, MT1, MT2 25, 25a) using a quality of service proxy (26); **characterized by**
providing a differentiated quality of service operation to at least one selected mobile terminal, the method comprising the steps of:
receiving a frame via the quality of service proxy from the at least one selected mobile terminal;
preventing transmission of an acknowledgment of receipt of the frame back to the at least one selected mobile terminal (100); and
forwarding the frame to a wired network (100).

3. A method for an access point for providing quality of service in a 802.11 wireless local area network (15), comprising the steps of:
processing received data from at least one mobile terminal (MT, MT1, MT2 25, 25a) using a quality of service proxy (26); **characterized by**
providing a differentiated quality of service operation to at least one selected mobile terminal, the method comprising the steps of:
setting a network allocation vector (NAV) for each mobile terminal (MT1, MT2) of a plurality of mobile terminals associated with an access point;
transmitting a unicast CF-End frame (130, 140) to at least one selected mobile terminal of the plurality of mobile terminals (MT1, MT2); and
resetting (130, 140) a network allocation vector (NAV) for the at least one selected mobile terminal (MT1, MT2) responsive to the unicast CF-End frame (130, 140) to enable distributed coordination function (DCF) access to the wireless network for the at least one selected mobile terminal (MT1, MT2).

4. The method as claimed in claim 3, comprising the steps of:
broadcasting a CF-End frame (150) to the plurality of mobile terminals; and
resetting the network allocation vector for any remaining mobile terminals.

5. A method for an access point for providing quality of service in a 802.11 wireless local area network (15), comprising the steps of:
processing received data from at least one mobile terminal (MT, MT1, MT2 25, 25a) using a quality of service proxy (26);
**characterized by**
providing a differentiated quality of service operation to at least one selected mobile terminal, the method comprising the steps of:
transmitting a frame from an access point (AP - 20), wherein said frame is received by each of a plurality of mobile terminals (MT1 - 25), said frame is addressed to the at least one selected mobile terminal (MT1 - 25a), and includes a larger than required value in a duration/ID field (165), which value is larger than DIFS+CW*slot_time, wherein DIFS is the DCF interframe spacing, CW is the contention window, and slot_time is the 802.11 slot time;
setting a network allocation vector (NAV) addressed for each mobile terminal (MT1 - 25) to which the frame was not addressed according to the indicated value;
providing priority access to the access point (AP - 20) by the at least one selected mobile terminal (MT1 - 25a) for a time period (T) responsive to the larger than required value.

## Patentansprüche

1. Verfahren für einen Zugangspunkt zum Bereitstellen einer Dienstqualität in einem drahtlosen 802.11-Lokalbereichsnetzwerk (15), mit den Schritten:
Verarbeiten empfangener Daten von zumindest einem Mobilendgerät (MT, MT1, MT2, 25, 25a) unter Verwendung eines Dienstqualitätsproxy (26), **gekennzeichnet durch**
Bereitstellen eines differenzierten Dienstqualitätsbetriebes an zumindest ein ausgewähltes Mobilendgerät, wobei das Verfahren die Schritte umfasst:
Empfangen eines Rahmens (60, 80) über den Dienstqualitätsproxy (26) von dem zumindest einen ausgewählten Mobilendgerät;
Verwerfen des empfangenen Rahmens (90, 65); und
Verhindern einer Übertragung einer Empfangsbestätigung des Rahmens zurück zu dem zumindest einen ausgewählten Mobilendgerät.

2. Verfahren für einen Zugangspunkt zum Bereitstellen einer Dienstqualität in einem drahtlosen 802.11-Lokalbereichsnetzwerk (15), mit den Schritten:
Verarbeiten empfangener Daten von zumindest einem Mobilendgerät (MT, MT1, MT2, 25, 25a) unter Verwendung eines Dienstqualitätsproxy (26), **gekennzeichnet durch**
Bereitstellen eines differenzierten Dienstqualitätsbetriebes an zumindest ein ausgewähltes Mobilendgerät, wobei das Verfahren die Schritte umfasst:
Empfangen eines Rahmens (60, 80) über den Dienstqualitätsproxy (26) von dem zumindest einen ausgewählten Mobilendgerät;
Verhindern einer Übertragung einer Empfangsbestätigung des Rahmens zurück zu dem zumindest einen ausgewählten Mobilendgerät; und
Weiterleiten des Rahmens an ein drahtgebundenes Netzwerk (100).

3. Verfahren für einen Zugangspunkt zum Bereitstellen einer Dienstqualität in einem drahtlosen 802.11-Lokalbereichsnetzwerk (15), mit den Schritten:
Verarbeiten empfangener Daten von zumindest einem Mobilendgerät (MT, MT1, MT2, 25, 25a) unter Verwendung eines Dienstqualitätsproxy (26), **gekennzeichnet durch**:
Bereitstellen eines differenzierten Dienstqualitätsbetriebes an zumindest ein ausgewähltes Mobilendgerät, wobei das Verfahren die Schritte umfasst:
Setzen eines Netzwerkallokationsvektors (NAV) für jedes Mobilendgerät (MT1, MT2) von einer Vielzahl von Mobilendgeräten, die mit einem Zugangspunkt verknüpft sind;
Übertragen eines Unicast-CF-Endrahmens (130, 140) an zumindest ein ausgewähltes Mobilendgerät der Vielzahl von Mobilendgeräten (MT1, MT2); und
Zurücksetzen (130, 140) eines Netzwerkallokationsvektors (NAV) für das zumindest eine ausgeählte Mobilendgerät (MT1, MT2) reagierend auf den Unicast-CF-Endrahmen (130, 140), um einen verteilten Koordinationsfunktion-(DCF)-Zugang zu dem drahtlosen Netzwerk für das zumindest eine ausgewählte Mobilendgerät (MT1, MT2) zu ermöglichen.

4. Verfahren nach Anspruch 3, mit den Schritten:
Senden eines CF-Endrahmens (150) an die Vielzahl von Mobilendgeräten; und
Zurücksetzen des Netzwerkallokationsvektors für alle verbleibenden Mobilendgeräte.

5. Verfahren für einen Zugangspunkt zum Bereitstellen einer Dienstqualität in einem drahtlosen 802.11-Lokalbereichsnetzwerk (15), mit den Schritten:
Verarbeiten empfangener Daten von zumindest einem Mobilendgerät (MT, MT1, MT2, 25, 25a) unter Verwendung eines Dienstqualitätsproxy (26), **gekennzeichnet durch**:
Bereitstellen eines differenzierten Dienstqualitätsbetriebes an zumindest ein ausgewähltes Mobilendgerät, wobei das Verfahren die Schritte umfasst:
Übertragen eines Rahmens von einem Zugangspunkt (AP-20), wobei der Rahmen von jedem einer Vielzahl von Mobilendgeräten (MT1-25) empfangen wird, wobei der Rahmen an das zumindest eine ausgewählte Mobilendgerät (MT1-25a) gerichtet ist und einen größeren Wert als erforderlich in einem Dauer/ID-Feld (165) umfasst, wobei der Wert größer als DIFS+CW*slot_time ist, wobei DIFS der DCF-Zwischenrahmenabstand ist, CW das Wettbewerbsfenster ist und slot_time die 802.11-Rahmenzeit ist;
Setzen eines Netzwerkallokationsvektors (NAV), der an jedes Mobilendgerät (MT1-25) gerichtet ist, an das der Rahmen nicht gerichtet wurde, gemäß dem angezeigten Wert;
Bereitstellen eines Prioritätszugangs zu dem Zugangspunkt (AP-20) **durch** das zumindest eine ausgewählte Mobileendgerät (MT1-25a) für einen Zeitraum (T) reagierend auf den Wert, der größer als erforderlich ist.

## Revendications

1. Procédé destiné à un point d'accès, afin de fournir une qualité de service dans un réseau local sans fil 802.11 (15), comprenant l'étape consistant à :
traiter des données reçues d'au moins un terminal mobile (MT, MT1, MT2 25, 25a) en utilisant un serveur mandataire de qualité de service (26) ;
**caractérisé par** l'étape consistant à :
fournir un service avec qualité de service différenciée à au moins un terminal mobile sélectionné ;
le procédé comprenant les étapes consistant à :
recevoir une trame (80, 60) dudit au moins un terminal mobile sélectionné, via le serveur mandataire de qualité de service (26) ;
supprimer la trame reçue (90, 65) ; et
empêcher la transmission d'un accusé de réception de la trame à destination dudit au moins un terminal mobile sélectionné.

2. Procédé destiné à un point d'accès, afin de fournir une qualité de service dans un réseau local sans fil 802.11 (15), comprenant l'étape consistant à :
traiter des données reçues d'au moins un terminal mobile (MT, MT1, MT2 25, 25a) en utilisant un serveur mandataire de qualité de service (26) ;
**caractérisé par** l'étape consistant à :
fournir un service avec qualité de service différenciée à au moins un terminal mobile sélectionné ;
le procédé comprenant les étapes consistant à :
recevoir une trame dudit au moins un terminal mobile sélectionné, via le serveur mandataire de qualité de service ;
empêcher la transmission d'un accusé de réception de la trame à destination dudit au moins un terminal mobile sélectionné (100) ; et
acheminer la trame vers un réseau filaire (100).

3. Procédé destiné à un point d'accès, afin de fournir une qualité de service dans un réseau local sans fil 802.11 (15), comprenant l'étape consistant à :
traiter des données reçues d'au moins un terminal mobile (MT, MT1, MT2 25, 25a) en utilisant un serveur mandataire de qualité de service (26) ;
**caractérisé par** l'étape consistant à :
fournir un service avec qualité de service différenciée à au moins un terminal mobile sélectionné ;
le procédé comprenant les étapes consistant à :
renseigner un vecteur NAV, pour *« Network Allocation Vector » -* Vecteur d'allocation de réseau, pour chaque terminal mobile (MT1, MT2) parmi la pluralité de terminaux mobiles associés à un point d'accès ;
émettre une trame CF-End, *« Contention Free* », pour fin de période sans conflit, à destinataire unique (130, 140) vers au moins un terminal mobile sélectionné parmi la pluralité de terminaux mobiles (MT1, MT2) ; et
réinitialiser (130, 140) un vecteur NAV pour ledit au moins un terminal mobile sélectionné (MT1, MT2) en réponse à la trame CF-End à destinataire unique (130, 140), afin de permettre à une fonction de coordination distribuée (DCF) d'accéder au réseau sans fil pour ledit au moins un terminal mobile sélectionné (MT1, MT2).

4. Procédé selon la revendication 3, comprenant les étapes consistant à :
diffuser généralement une trame CF-End (150) vers la pluralité de terminaux mobiles; et
réinitialiser le vecteur NAV pour chacun des terminaux mobiles restants.

5. Procédé destiné à un point d'accès, afin de fournir une qualité de service dans un réseau local sans fil 802.11 (15), comprenant l'étape consistant à :
traiter des données reçues d'au moins un terminal mobile (MT, MT1, MT2 25, 25a) en utilisant un serveur mandataire de qualité de service (26) ;
**caractérisé par** l'étape consistant à :
fournir un service avec qualité de service différenciée à au moins un terminal mobile sélectionné ;
le procédé comprenant les étapes consistant à :
émettre une trame à partir d'un point d'accès (AP - 20), ladite trame étant reçue par chacun des terminaux dans une pluralité de terminaux mobiles (MT1 - 25), ladite trame étant adressée audit au moins un terminal mobile sélectionné (MT1 - 25a) et comprenant une valeur plus grande que nécessaire dans une zone de durée/d'identification (165), ladite valeur étant supérieure à DIFS + CW * durée de créneau temporel, où DIFS est l'intervalle entre les trames en mode DCF, CW est la fenêtre de conflit et la durée de créneau temporel est celle du créneau temporel 802.11 ;
renseigner un vecteur NAV adressé à chaque terminal mobile (MT1 - 25) auquel la trame n'était pas adressée, en fonction de la valeur indiquée ;
fournir un accès prioritaire au point d'accès (AP - 20) audit au moins un terminal mobile sélectionné (MT1 - 25a) pendant une période de temps (T), en réponse à la valeur plus grande que nécessaire.
